**Europäisches Patentamt**

**European Patent Office**

**Office européen des brevets**

(19)

(11) Numéro de publication: **0 187 795**

**B1**

(12) # FASCICULE DE BREVET EUROPÉEN

(45) Date de publication du fascicule du brevet:
14.12.88

(51) Int. Cl.⁴: **B 01 D 33/26,** B 01 D 33/08

(21) Numéro de dépôt: **85903300.3**

(22) Date de dépôt: **02.07.85**

(86) Numéro de dépôt international:
**PCT/FR 85/00182**

(87) Numéro de publication internationale:
**WO 86/00543 (30.01.86 Gazette 86/03)**

(54) SECTEUR A EPAISSEUR VARIABLE POUR FILTRE ROTATIF A DISQUES.

(30) Priorité: **04.07.84 FR 8411051**

(43) Date de publication de la demande:
**23.07.86 Bulletin 86/30**

(45) Mention de la délivrance du brevet:
**14.12.88 Bulletin 88/50**

(84) Etats contractants désignés:
**DE GB IT NL**

(56) Documents cité:
**US-A-3 438 505**

**Le dossier contient des informations techniques présentées postérieurement au dépôt de la demande et ne figurant pas dans le présent fascicule.**

(73) Titulaire: **ALUMINIUM PECHINEY, 23, rue Balzac, F-75008 Paris Cédex 08 (FR)**

(72) Inventeur: **BARRA, Jean, Lou Claou, F-13120 Gardanne (FR)**

(74) Mandataire: **Vanlaer, Marcel, PECHINEY 28, rue de Bonnel, F-69433 Lyon Cédex 3 (FR)**

LIBER, STOCKHOLM 1988

## Description

L'invention concerne des secteurs à épaisseur variable destinés à constituer un disque de filtre rotatif pouvant comporter plusieurs disques.

Depuis longtemps déjà, il est connu de réaliser la séparation par filtration d'une phase continue, liquide ou gazeuse, et d'une phase dispersée, solide ou liquide, formant initialement une suspension résultant, par exemple, de l'attaque d'un minerai.

Pour ce faire, la suspension est amenée au-dessus d'un support, tel que grille, toile, membrane, etc... sur lequel les particuies solides se déposent en formant un gâteau d'épaisseur variable, tandis que la phase liquide constituant le filtrat, passe à travers la texture de filtration puis est recueillie par tout moyen de collecte.

Selon les caractéristiques des suspensions à filtrer, telles que par exemple la concentration en matière sèche, la dimension des matériaux solides, l'aptitude à la séparation, l'agressivité du milieu, le degré de classification exigé, l'homme de l'art est amené à faire le choix d'un appareil approprié parmi les nombreuses technologies proposées sur le marché.

Parmi ces technologies de filtration décrites dans la littérature spécialisée, l'une d'entre elles est très souvent employée et appréciée dans le domaine de la séparation des phases liquide et solide de suspensions résultant des attaques de minerais selon les procédés hydrométallurgiques: cette technologie concerne les filtres rotatifs à disques, tels que ceux décrits par exemple dans "Chemical Engineer's Handbook", page 978, par John H. PERRY, Edition n° 5 Graw Hille Book Company, 1950.

Tels qu'ils sont décris, les filtres rotatifs à disques comportent une pluralité de disques fixés perpendiculairement à un arbre horizontal creux, constitués de canaux dans lesquels on pratique des effets divers tels que, aspiration, soufflage... Chaque disque est formé de plusieurs secteurs indépendants garnis de toiles métalliques et/ou de sachets textiles filtrants, raccordés à l'arbre horizontal creux précité.

Lors de l'opération de filtration, les disques, munis de leurs secteurs, plongent dans une auge contenant la suspension à filtrer, la phase solide étant collée par aspiration sur les toiles filtrantes, tandis que la phase liquide séparée s'écoule dans les collecteurs de l'arbre horizontal muni d'au moins un distributeur, au moyen de raccords existant entre chaque secteur et l'arbre lui-même. La phase solide disposée sur la toile filtrante est ensuite essorée lors du passage à l'air libre, puis éliminée par soufflage d'air à contre-courant à travers les surfaces filtrantes.

Or, il est bien connu que chaque disque rotatif est formé de secteurs, chacun constitué d'une armature rigide donnant la forme au secteur, cette armature contenant le support de toile de filtration et une pièce de raccordement à l'arbre creux de collecte et d'entraînement.

Selon l'art connu, le support de toile est généralement formé de matériaux métalliques perforés, tel que par exemple tôle perforée, plane ou ondulée, dans le but de présenter le minimum de contact avec la toile filtrante. Ainsi, chaque face de secteur est munie d'un support de toile. Et ces deux supports de toile, insérés dans l'armature du secteur sont maintenus entre eux, à distance constante, par des entretoises fixant l'épaisseur interne du secteur, cette épaisseur interne étant définie par la quantité de phase liquide à évacuer par la base du secteur c'est-à-dire près de l'arbre, là où la largeur dudit secteur est la plus faible. Dans d'autres cas, les deux supports de toile et les entretoises qui les relient peuvent être constitués par exemple par une seule tôle ondulée, dont la hauteur d'ondulation constitue l'épaisseur interne du secteur nécessaire à l'écoulement de la phase liquide.

Mais de tels secteurs, à épaisseur constante, présentent l'inconvénient majeur de disposer d'un volume interne conséquent renfermant une quantité importante de la phase liquide, qui est évacuée durant l'étape d'essorage simultanément avec la fraction de phase liquide imprégnant la phase solide déposée sur les faces du secteur. Mais l'étape d'essorage de la phase liquide, fixée par l'étape de filtration et la position physique du secteur au moment du soufflage, est généralement insuffisante pour permettre l'évacuation complète de la phase liquide se trouvant dans le secteur. Et dès lors que se produit l'étape de soufflage, la fraction de la phase aqueuse se trouvant encore dans le secteur est projetée au travers des toiles de filtration, réhumidifiant la phase solide encore présente sur la toile. Ainsi, l'efficacité de l'essorage est diminuée.

Mais de tels secteurs à épaisseur constante présentent également un autre inconvénient majeur. En effet, même si la durée de l'étape d'essorage est suffisante pour évacuer du secteur la totalité de la phase liquide, initialement présente et provenant de l'essorage, il est souvent constaté qu'une partie de cette phase liquide est encore présente dans le collecteur de l'arbre au moment où se produit le soufflage. La présence de cette phase liquide provoque une réduction de section du collecteur pour le passage de l'air, augmentant ainsi les pertes de charge et réduisant de ce fait l'efficacité du soufflage. Il est certain qu'un tel inconvénient peut être limité par l'augmentation du diamètre du collecteur ou bien par l'inclinaison du collecteur. Mais ces deux possibilités entraînent l'apparation d'un nouvel inconvénient qui est l'augmentation du diamètre de l'arbre de collecte et d'entraînement et de toute la technologie qui s'y rattache, telle que distributeur, paliers et étanchéité de l'arbre au passage de la cuve.

On connaît aussi par le document US-A-3 438 505 un secteur dont l'epaisseur est décroissante du centre vers la periphérie et la structure interne formée en particulier par une armature rigide support de toile faisant en même temps office de collecteur et de conduit d'évacuation du filterat. L'exemple de réalisation décrit dans ce document est un secteur dont la variation d'épaisseur non précisée est faible.

Le secteur de filtration selon l'invention, en vue de constituer un disque de filtration comprenant une armature rigide lui donnant forme, des supports de toile de filtration à l'intérieur de l'armature et une pièce de raccordement à un arbre creux d'entraînement d'un filtre rotatif, ledit arbre contenant des collecteurs de fuides liquide et gazeux, ledit secteur étant d'épaisseur interne croissante de son extrémité périphérique jusqu'à son extrémité au voisinage de l'arbre creux d'entraînement est caractérisé en ce que l'épaisseur interne "$e_o$" du secteur à son extrémité péripherique (14) répond à l'inégalité 0 $\leqslant e_o \leqslant$ e/10 dans laquelle "e" est l'épaisseur du secteur à l'extrémité voisine de l'arbre d'entraînement (2).

Ainsi que dans l'art antérieur, l'épaisseur interne au voisinage de l'arbre est déterminée pour offrir une section suffisante à l'évacuation de la phase liquide d'imprégnation de la phase solide déposée sur la toile du secteur et de la quantité de phase liquide contenue dans le secteur, qui est fréquemment inférieure à la quantité de phase liquide contenue dans un secteur de l'art antérieur de mêmes dimensions mais ayant une épaisseur constante.

De même que dans l'art antérieur, la quantité de la phase liquide à évacuer par la section du secteur à sa périphérie est pratiquement nulle.

Selon l'invention, l'épaisseur interne du secteur à sa périphérie que l'on repère par "$e_o$" peut donc être nulle, si les supports de toiles sont constitués de surfaces planes par exemple.

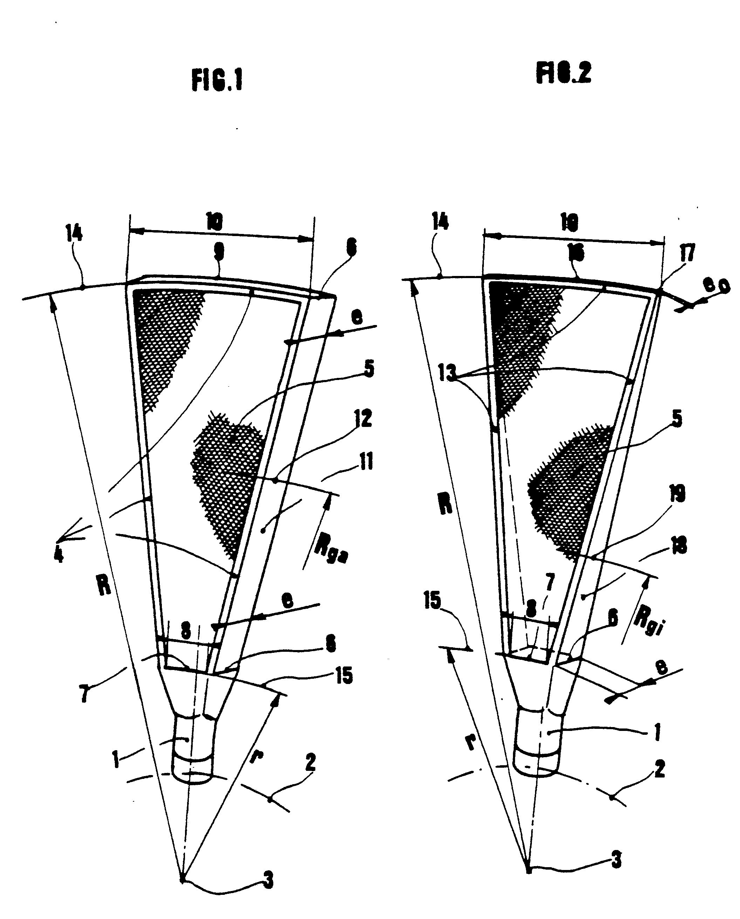

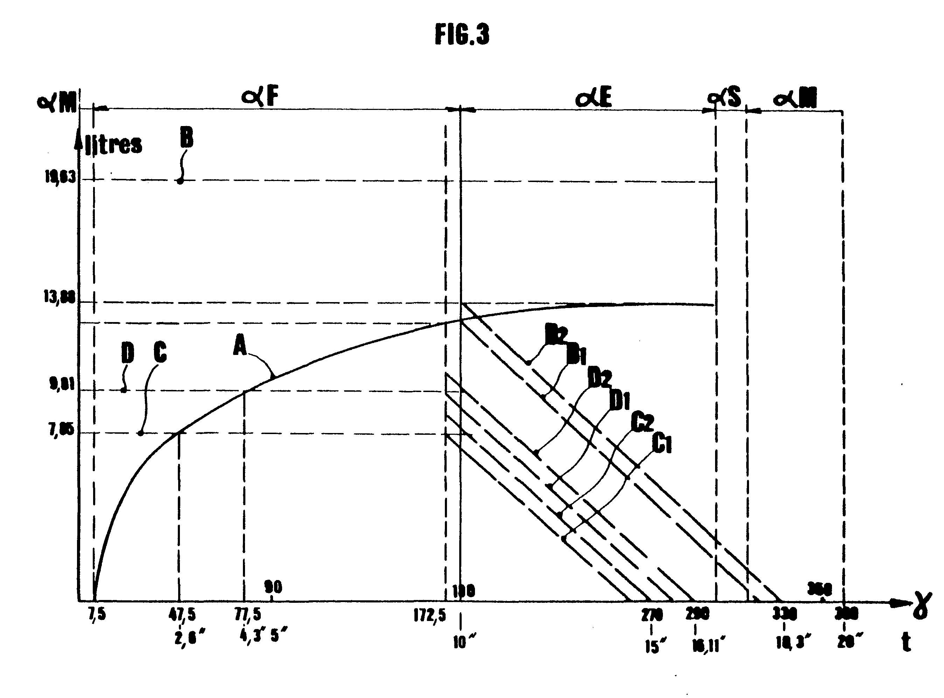

Pour compléter les connaissances relatives à l'invention, il est fait usage des figures 1 et 2 permettant d'effectuer la comparaison entre un secteur selon l'art antérieur (figure 1) et un secteur selon l'invention (figure 2).

Selon la figure 1, illustrant un des aspects de l'art antérieur, un secteur de filtration est en communication par un moyen approprié (1) faisant partie du secteur avec l'arbre de collecte et d'entraînement (2) tournant autour de son axe géométrique (3). Ce moyen de communication (1) est solidaire d'une ossature (4) à l'intérieur de laquelle sont placés de part et d'autre des supports de toile (5), maintenus à distance constante l'un de l'autre, conférant au secteur une épaisseur "e" (6) égale à la périphérie (14) jusqu'à l'extrémité (15) au voisinage de l'arbre (2). La section interne (7) du secteur offerte au passage de la phase liquide, contenue dans le secteur est située à une distance "r" de l'axe de rotation (3). Cette section interne (7) se définit par la largeur (8) du secteur au voisinage de l'arbre (2) et par l'épaisseur "e" (6).

La section (9) à la périphérie située à la distance "R" de l'axe (3) est définie par la largeur du secteur (10) à la périphérie (14) et l'épaisseur "e" (6).

Le volume interne d'un tel secteur peut être calculé d'après le théorème de Guldin:

"Si S est l'aire d'une surface plane tournant autour d'un axe situé dans son plan et ne la comportant pas, le volume de révolution engendré par cette surface est V = $2 \pi$ RgS, Rg étant la distance séparant le centre de gravité de l'aire S de l'axe de rotation".

Ainsi, dans le cas de la figure 1, correspondant à l'art antérieur, la surface $S_a$ (11) est définie par le produit de (R-r) et "e" (6). Son centre de gravité (12) est situé à une distance $Rg_a$ égale à [(R-r)/2 + r] de l'axe de rotation (3). Ainsi, le volume interne $V_a$ du secteur dans le cas de l'art antérieur est:

$$V_a - (R-r) \cdot e.2 \, \pi Rg_{(a)} / n$$

n étant le nombre de secteurs formant un disque.

Selon la figure 2, illustrant l'invention, un secteur de filtration est en communication par un moyen approprié (1) faisant partie dudit secteur avec l'arbre de collecte et d'entraînement (2) tournant autour de son axe géométrique (3). Ce moyen de communication (1) est solidaire d'une ossature (13) à l'intérieur de laquelle sont placés de part et d'autre des supports de toiles (5) concourants, conférant au secteur une épaisseur croissante depuis la périphérie (14) jusqu'à l'extrémité (15) au voisinage de l'arbre (2). La section interne (7) du secteur offerte au passage de la phase liquide contenue dans le secteur est la même que dans l'axe de roration (3). Cette section interne (7) se définit par la largeur du secteur (8) au voisinage de l'arbre (2) et par l'épaisseur "e" (6). Ainsi, la largeur (8) et l'épaisseur "e" (6) sont les mêmes pour les secteurs de l'art antérieur et de l'invention. La section (16) à la périphérie (14) située à la distance "R" de l'axe (3) est définie par la largeur (10) du secteur à ladite périphérie et par l'épaisseur "$e_o$" (17).

Le volume interne $V_i$ d'une tel secteur est également calculé selon le théorème de Guldin. Ainsi, dans le cas de la figure 2, correspondant à l'invention, la surface $S_i$ (18) est définie par le produit de (R-r) et $(e_o + e)/2$. Son centre de gravité (19) est situé à une distance $Rg_{(i)}$ égale à:

$$[Rg_{(i)} - [(R-r)/3 \, (2e + e_o)/(e + e_o)]]$$

de l'axe de rotation (3). Ainsi, le volume interne $V_i$ du secteur dans le cas de l'invention est:

$$V_i = (R-r) \, (e_o + e) \pi Rg_{(i)} / n$$

dans laquelle n est toujours le nombre de secteurs constituant le disque.

Selon une variante, correspondant au cas particulier où "$e_o$" est nulle, le volume interne $V_i$ est déterminé par la relation:

$$V_i = (R-r) \, e \, \pi Rg_{(i)} / n$$

Dès lors, il apparaît entre les volumes internes

de secteurs $V_i$ selon l'invention et $V_a$, selon l'art antérieur, un rapport $V_i/V_a$ qui répond à l'inégalité:

$$(R+2r)/3(R+r) \leqslant V_i/V_a < 1$$

révélant ainsi que le volume interne $V_i$ d'un secteur selon l'invention est toujours inférieur au volume interne $V_a$ du même secteur selon l'art antérieur, c'est-à-dire à épaisseur "e" constante.

Selon la variante, correspondant au cas particulier où "e" est nul, ce rapport des volumes $V_i/V_a$ répond à l'égalité:

$$V_i/V_a = (R+2r)/3(R+r)$$

Grâce au secteur selon l'invention, il est possible de mieux dimensionner les collecteurs et l'arbre d'un filtre rotatif à disques pour obtenir une évaluation plus rapide de la phase liquide et une meilleure efficacité du soufflage.

**Exemple** (illustré par les figures 1 à 5)

Dans le cadre de la recherche et de la mise au point d'un secteur de filtration pour filtre à disque à epaisseur croissante "$e_o$" depuis la périphérie (14) jusqu'à l'extrémité (15) d'épaisseur "e" au voisinage de l'arbre (2), la demanderesse a étudié deux secteurs ayant la même surface de filtration et la même section de passage, l'un d'épaisseur "e" constante appartenant à l'art antérieur (fig. 1), l'autre d'épaisseur variable appartenant à l'invention (fig. 2).

Les caractéristiques des sections étaient les suivantes:

| | Art antérieur (fig. 1) | invention (fig. 2) |
|---|---|---|
| R | 20 dm | 20 dm |
| r | 5 dm | 5 dm |
| surface filtration | 0,833 m$^2$ | 0,833 m$^2$ |
| e | 0,4 dm | 0,4 dm |
| $e_o$ | 0,4 dm | 0 |
| sect.passage (7) | 0,48 dm$^2$ | 0,48 dm$^2$ |

Le volume interne $V_a$ du secteur selon l'art antérieur était de 19,63 litres tandis que le volume interne $V_i$ du secteur selon l'invention était de 7,85 litres.

Le filtre sur lequel étaient montés des secteurs formant des disques immergés à 50 %, tournait à la vitesse de 3 tours par minute dans le but d'atteindre une productivité en phase liquide de 3000 litres.h.$^{-1}$.m$^2$.

Dans ces conditions, la quantité de la phase liquide traversant la toile de filtration durant les étapes de filtration et d'essorage correspondant à un four de rotation, était égale à 13,88 litres.

A partir de mesures de débit de la phase liquide opéré sur un filtre à disques, en faisant varier la teneur en matière sèche de la suspension à filtrer, de manière à obtenir sur la toile de filtration des secteurs des épaisseurs différentes de la phase solide déposée, on a pu établir la courbe de débit cumulé (A) (fig. 3) de la phase aqueuse à travers la toile de filtration progressivement chargée, ramenée à la surface de filtration d'un secteur. L'axe d'abscisse $\gamma$ "en degrés" représente, selon une première échelle, une révolution de 360° d'un secteur, selon une deuxième échelle, les temps "t" en seconde correspondant à une révolution en 20 secondes (3 tours/minute) et également les étapes $\alpha F$ correspondant à l'angle de filtration, $\alpha E$ correspondant à l'angle d'essorage, $\alpha S$ correspondant à l'angle de soufflage et $\alpha M$ angle mort non productif, le cumul de ces angles correspondant à une révolution. L'axe d'ordonnée représente en litres le débit cumulé de la phase liquide transitant par un secteur et ce volume interne des différents secteurs étudiés.

Comme on peut le remarquer sur cette courbe (A), le débit de la phase liquide, au travers de la toile de filtration et transitant par l'intérieur du secteur est plus important au début de l'étape de filtration $\alpha F$ qu'à la fin, en raison de l'inexistence ou de la faible épaisseur de la phase solide sur la toile au début de cette étape et de son épaisseur maximale à la fin.

De même, on peut remarquer que durant l'étape d'essorage $\lambda E$, le débit de la phase liquide au travers de la toile est faible puisqu'il correspond à l'évacuation d'une partie de la phase liquide présente dans la phase solide sur toile.

A partir de cette courbe, on a pu déterminer l'influence que peut avoir le volume interne d'un secteur sur l'instant où le secteur commence à déverser dans les collecteurs de l'arbre la phase liquide qui le traverse et sur l'instant où l'intérieur du secteur est débarrassé de la phase liquide qui le traversait.

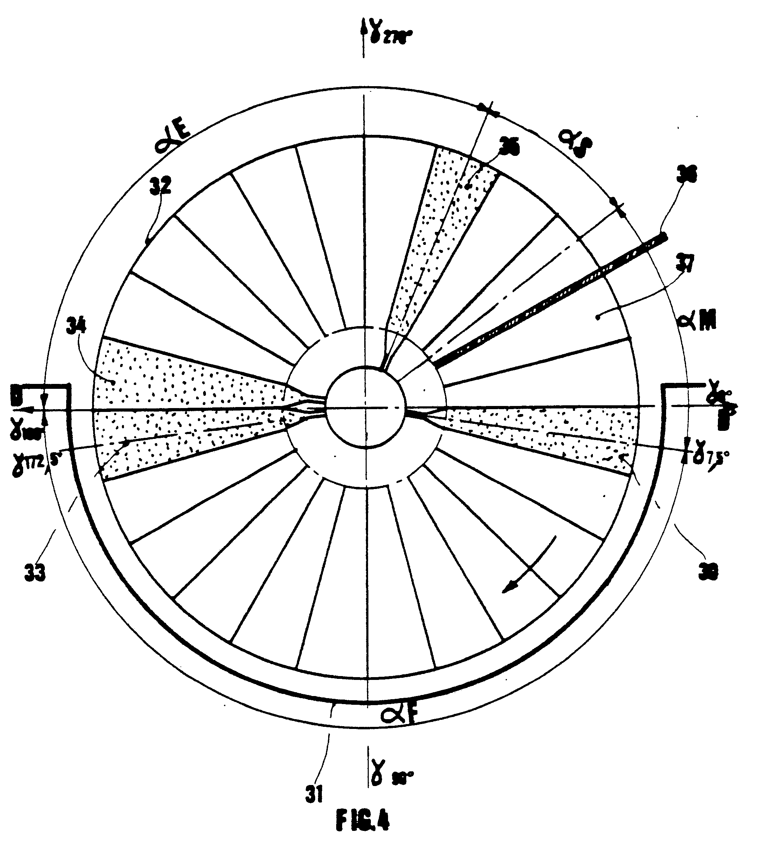

Selon le secteur de l'art antérieur ayant un volume interne de 19,63 litres (repère B), on a pu constater que le volume interne de ce secteur n'était jamais rempli totalement de la phase liquide qui le traverse et que selon la figure 4 le début de l'evacuation de cette phase liquide commence à se faire quand ledit secteur a déjà embrassé un angle "$\gamma$" d'environ 172,5° par rapport à sa position de départ (pour laquelle $\gamma$ est égale à 7,5°).

La figure 4 associée à la figure 3 illustre bien le début de l'évacuation de la phase liquide. En effet, si l'on considère la position (30) de départ d'un secteur venant d'être immergé par rapport au niveau DD' de la suspension dans l'auge (37) (correspondant à une immersion de 50 % de l'arbre d'entraînement (32)), cette position (30) correspond à un angle $\gamma$ qui est bien égal à 7,5°, quand le disque (32) est constitué, par exemple, de 24 secteurs ayant un angle au sommet de 15°. Quand le secteur (30) vient en position (33), il a déjà embrassé un angle de 172,5° par rapport à sa position de départ et l'angle $\gamma$ mesuré dans le sens de la rotation du disque (32) est alors de 180°. Au-delà de γ = 180°, le secteur occupe la position (34) correspondant à l'essorage d'angle αE. Puis, dans la position (35), il pénètre dans la zone de soufflage correspondant à l'angle αs, au cours duquel le gâteau déposé sur les faces du secteur est dévié par les déflecteurs (36). Enfin, le secteur (35) entre dans une zone non productive, représentée par l'angle αM.

Selon la figure 1, depuis l'angle γ = 7,5° pour lequel commence l'étape de filration αF et jusqu'à l'angle γ = 180° correspondant à la fin de l'étape de filtration αF, le secteur (B) de l'art antérieur reçoit sans déverser la quantité de la phase liquide traversant la toile, représentée par (A) et à partir de γ = 180°, ce secteur commence à déverser dans les collecteurs de l'arbre la phase liquide qu'il contient, pendant un temps d'évacuation selon la droite B1 dont la pente a été préalablement déterminée par l'expérience sur un secteur en mouvement. La droite B1 correspond au débit cumulé de l'évacuation de la phase liquide emmagasinée dans le secteur depuis γ = 7,5° jusqu'à γ = 180°, auquel doit s'ajouter le débit de la phase liquide d'essorage débutant à γ = 180° et donnant la droite des débits cumulés B2.

Ainsi, il apparaît que l'évacuation de la phase liquide transitant dans le secteur risque de se prolonger jusqu'à γ = 350°, recouvrant ainsi la totalité de l'étape αE d'essorage et interceptant l'étape de soufflage αS en provoquant le refoulement de la phase aqueuse dans ce secteur et le réhumectage sur toile de la phase solide essorée.

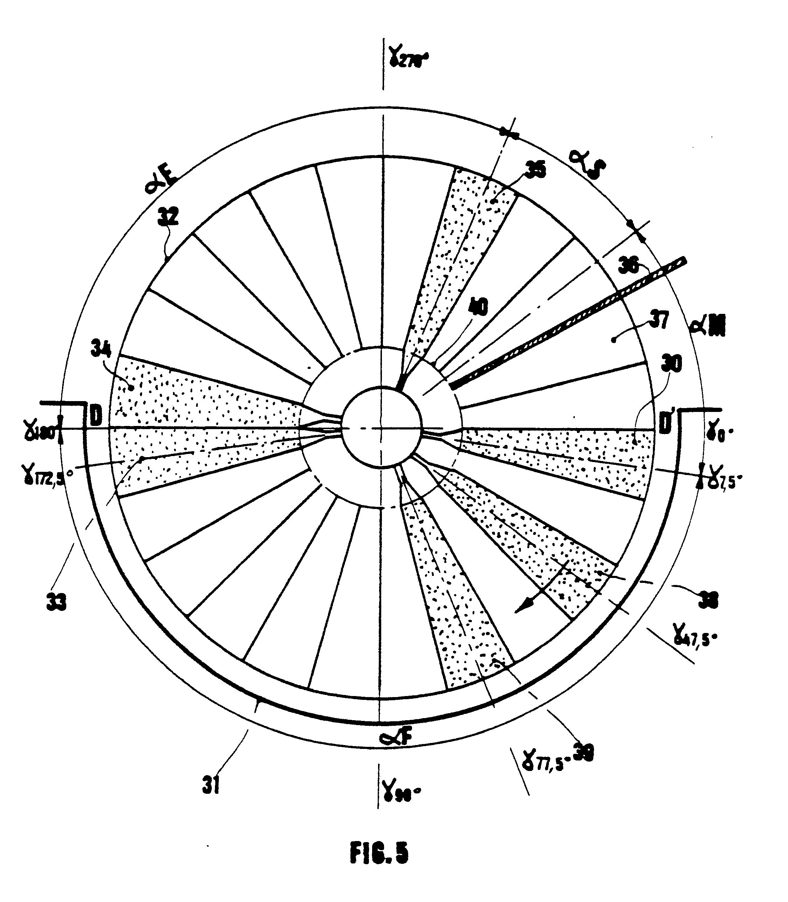

Selon un secteur (C) de l'invention pour e₀ = O, et de volume interne 7,85 litres, on a pu constater que le secteur commençait à se remplir en début de l'étape de filtration pour γ = 7,5° et que suivant la courbe des débits cumulés (A), il était entièrement rempli pour γ = 47,5°. La figure 5 montre qu'un tel secteur entièrement rempli de phase aqueuse commence à déverser par gravité cette phase dans l'arbre quant il atteint la position (33) pour l'angle γ = 172,5°, alors qu'il commençait à se remplir comme dans l'art antérieur et selon la position (30) pour l'angle γ = 7,5°. En fait, ce secteur était déjà plein quand il occupait la position (38) correspondant à l'angle γ = 47,5°, c'est-à-dire que l'excédent de phase liquide s'écoulait déjà à ce moment dans le collecteur d'arbre (40).

Selon la figure 3, à partir de la position correspondant à l'angie γ = 172,5°, le secteur se vidange de la phase liquide selon un débit cumulé illustré par la droite C1 de pente proche de la pente de la droite B1. A ce débit cumulé doit être ajoutés d'une part le débit correspondant à la fin de la filtration pour 172,5° < γ < 180° et d'autre part le débit de la phase liquide d'essorage débutant pour l'angle γ = 180° et donnant la droite des débits cumulés C2.

Ainsi, on a pu constater que l'évacuation de la phase liquide transitant dans le secteur s'achève pour la valeur de l'angle γ = 270°, c'est-à-dire bien avant que débute l'étape de soufflage αS.

Dès lors que le secteur selon l'invention est vidangé de toute la phase liquide pour l'angle γ = 270°, il est constaté que la phase liquide encore présente dans le collecteur est évacuée avant que commence l'étape de soufflage augmentant l'efficacité du soufflage et évitant le réhumectage de la phase solide sur la toile de filtration.

La comparaison entre les secteurs de l'art antérieur (B) et de l'invention (C) montre que la phase liquide transitant par ce secteur est évacuée dans l'arbre:

- pour l'art antérieur, des positions γ = 180° à γ = 330°, représentant un temps d'évacuation compris entre 10 et 18,3 secondes, c'est-à-dire l'évacuation de 13,88 litres en 8,3 secondes.
- pour l'invention, des positions γ = 47,5° à γ = 270°, représentant un temps d'évacuation compris entre 2,6 et 15 secondes, c'est-à-dire l'évacuation de 13,88 litres en 12,4 secondes.

Selon un secteur (D) de l'invention, pour lequel e₀ = e/10, et de volume interne 9,81 litres, on a pu également constater que le secteur commençait à se remplir en début de l'étape de filtration pour γ = 7,5° et que suivant la courbe des débits cumulés (A), il était entièrement rempli pour γ = 77,5°. La figure 5 montre qu'un tel secteur, entièrement rempli de phase aqueuse, commence à déverser par gravité cette phase dans l'arbre quand il atteint la position (33) pour l'angle γ = 172,5°, alors qu'il commençait à se remplir comme dans l'art antérieur et selon la position (30) pour l'angle γ = 7,5°. En fait, ce secteur était déjà plein quand il occupait la position (39) correspondant à l'angle γ = 77,5°, c'est-à-dire que l'excédent de phase liquide s'écoulait déjà à ce moment dans le collecteur d'arbre.

Selon la figure 3 à partir de la position correspondant à l'angle γ = 172,5°, le secteur se vidange de la phase liquide, selon un débit cumulé illustré par la droite D1 de pente proche de la pente de la droite C1. A ce débit cumulé D1 doit être ajouté le débit de la phase liquide d'essorage débutant pour l'angle γ = 180° et donnant la droite des débits cumulés D2.

Ainsi, on a pu constater que l'évacuation de la phase liquide transitant dans le secteur s'achève pour la valeur de l'angle 290°, c'est-à-dire avant que débute l'étape de soufflage αS.

Dès lors que le secteur selon l'invention est vidangé de toute la phase liquide pour l'angle γ = 290°, il est constaté que la phase liquide encore présente dans le collecteur est évacuée avant que commence l'étape de soufflage augmentant l'efficacité du soufflage et évitant le réhumectage de la phase solide sur la toile de filtration.

Ainsi, la comparaison entre les secteurs de l'art antérieur (B) et de l'invention (D) montre que la phase liquide transitant par le secteur est évacuée dans l'arbre:

- pour l'art antérieur, des positions $\gamma$ = 180° à $\gamma$ = 330°, représentant un temps d'évacuation compris entre 10 secondes et 18,3 secondes, c'est-à-dire l'évacuation de 13,88 litres en 8,3 secondes.
- pour l'invention, des positions $\gamma$ = 77,5° à $\gamma$ = 290° représentant un temps d'évacuation compris entre 4,3 et 16,11 secondes, c'est-à-dire l'évacuation de 9,81 litres en 11,81 secondes.

Dès lors, il apparaît peu de différence entre les temps d'évacuation entre les secteurs (C) et (D) de l'invention, tout en remarquant cependant que la fin de la vidange du secteur (D) se trouve plus près du soufflage $\alpha S$ que le secteur (C), entraînant ainsi une diminution du temps d'évacuation des collecteurs.

## Revendications

1. Secteur de filtration en vue de constituer un disque de filtration de filtre rotatif comprenant une armature rigide lui donnant forme, des supports de toile de filtration à l'intérieur de l'armature et une pièce de raccordement à un arbre creux d'entraînement (2) contenant les collecteurs de fluides liquide et gazeux, ledit secteur étant d'épaisseur croissante de son extrémité périphérique (14) jusqu'à son extrémité (15) au voisinage de l'arbre creux d'entraînement (2), caractérisé en ce que l'épaisseur interne "$e_o$" du secteur à son extrémité périphérique (14) répond à l'inégalité

$$o \leqslant e_o \leqslant e/10$$

dans laquelle "e" est l'épaisseur du secteur à l'extrémité voisine de l'arbre d'entraînement (2).

2. Secteur de filtration en vue de constituer un disque d'un filtre rotatif selon la revendication 1 caractérisé en ce que la section interne (7) du secteur offerte au passage de la phase liquide contenue dans le secteur, définie par la largeur du secteur (8) au voisinage de l'arbre (2) et par l'épaisseur "e" est la même que la section de passage dans l'axe de rotation (3).

## Patentansprüche

1. Filtrationssektor für den Aufbau einer Filterscheibe in einem Drehfilter mit einem ihm seine Form gebenden steifen Rahmen, im Inneren dieses Rahmens angeordneten Trägern für Filtertuch und einem Verbindungsstück zu einer die Sammler für Flüssigkeit und Gase enthaltenden hohlen Antriebswelle (2), wobei besagter Sektor eine Dicke aufweist, die von seinem umfangsseitigen Ende (14) zu seinem der hohlen Antriebswelle (2) benachbarten Ende (15) hin zunimmt,

dadurch gekennzeichnet, daß die innere Dicke "$e_o$" des Sektors an seinem umfangsseitigen Ende (14) der Ungleichung

$$o \leqslant e_o \leqslant e/10$$

genügt, in der "e" die Dicke des Sektors an dessen der Antriebswelle (2) benachbartem Ende ist.

2. Filtrationssektor nach Anspruch 1, dadurch gekennzeichnet, daß der für den Zugang der im Sektor enthaltenen flüssigen Phase angebotene innere Querschnitt (7) des Sektors, der durch die Breite (8) des Sektors in der Nachbarschaft der Welle (2) und durch die Dicke "e" definiert ist, der gleiche ist wie der Durchtrittsquerschnitt in der Rotationsachse (3).

## Claims

1. A filtration sector for making up a filtration disc for rotary filter comprising a rigid frame imparting its shape thereto, supports for filter cloth within the frame and a member for connection to a hollow drive shaft (2) containing liquid and gaseous fluid collectors, said sector being of an increasing thickness from its peripheral end (14) to its end (15) in the vicinity of the hollow drive shaft (2), characterised in that the internal thickness "$e_o$" of the sector at its periphery (14) corresponds to the inequality

$$o \leqslant e_o \leqslant e/10$$

wherein "e" is the thickness of the sector at the end in the vicinity of the driveshaft (2).

2. A filtration sector for making up a disc of rotary filter according to claim 1, characterised in that the internal section (7) of the sector which is afforded to the flow of liquid phase contained in the sector, being defined by the width (8) of the sector in the vicinity of the shaft (2) and by the thickness "e", is the same as in the axis of rotation (3).

## FIG.1

## FIG.2

FIG.3

0 187 795

FIG.4

**FIG.5**